# EUROPEAN PATENT APPLICATION

(11) **EP 4 614 010 A1**
(43) Date of publication of application: **10.09.2025**
(21) Application number: 25161835.1
(22) Date of filing: 05.03.2025
(51) Int. Cl.: F16B 21/09, A45F 5/02, H04B 1/3888

(54) **A CONNECTOR STUD, CONNECTOR DOCK AND CONNECTOR SYSTEM**

(30) Priority: 05.03.2024 GB 202403177
(71) Applicant: Peter Jones (ILG) Limited, Abergavenny, Monmouthshire NP7 5YG (GB)
(72) Inventor: FALL, Christopher, Cardiff, CF14 4AD (GB); VANN, Thomas, Caerleon, NP183DX (GB); WOOD, Daniel, Pontypool, NP48HN (GB)
(74) Representative: Haseltine Lake Kempner LLP

(57) **Abstract**

According to the present disclosure there is provided a connector stud comprising: a head component comprising a head portion and a neck portion extending from a first side of the head portion, the head portion having a regular polygonal shape; wherein the head component comprises an annular groove in the first side of the head portion, the annular groove being configured to receive a protrusion of a connector dock. There is also provided a connector dock comprising: a receiving portion for receiving the head portion of the connector stud, the head portion having a regular polygonal shape; a cantilevered tab provided at a front of the receiving portion, the tab having a protrusion which projects from a rear surface of the tab and extends towards a rear of the retaining portion; wherein the protrusion is configured to engage an annular groove formed in a first side of the head portion of the connector stud. There is also provided a connector system comprising the connector stud and connector dock.

## Description

### Field of Invention

The present disclosure relates to a connector stud, connector dock and a connector system.

### Background

Connector systems are known for detachably connecting devices and/or equipment to a user's clothing or another item.

Such connector systems typically comprise a male connector stud which is attached to or incorporated into the equipment. A separate female dock may be located on the item to which the equipment is to be attached and the connector stud engages with the dock to affix the equipment in the required position.

Such connector systems may be used by personnel in a variety of sectors to connect and carry said devices and/or equipment. In many cases, the proper retention of the equipment is safety critical and thus the connector system must be sufficiently robust to avoid the equipment being inadvertently released from the connector dock.

The invention seeks to provide an improved connector stud and dock which has a low-profile design.

### Summary

According to an aspect, there is provided a connector stud comprising:
a head component comprising a head portion and a neck portion extending from a first side of the head portion, the head portion having a regular polygonal shape;
wherein the head component comprises an annular groove in the first side of the head portion, the annular groove being configured to receive a protrusion of a connector dock.

The annular groove may encircle the neck portion.

The connector stud may further comprise a circular boss which protrudes from a second side of the head portion, the second side being opposed to the first side.

The connector stud may further comprise an exit slot which forms a discontinuity in a radially outer wall of the annular groove, the exit slot configured to allow withdrawal of the protrusion of the connector dock from the annular groove.

The connector stud may further comprise a base component comprising a base plate and a spacer which projects away from the base plate. At least one of the spacer and the neck portion may comprise a base attachment interface configured to attach the head component to the base component.

The base attachment interface may be formed by one of the spacer and the neck portion comprising a recess and the other of the spacer and the neck portion comprising a complementary protrusion which is received by the recess; wherein the recess and the protrusion are configured to prevent rotation of the head component relative to the base component. The base component may comprise a threaded insert which sits at least partially within a thickness of the spacer for receiving a screw which passes through the neck portion of the head component to fasten the head component to the base component.

According to another aspect, there is provided a device comprising a connector stud as described above.

The device may be an electronic device, such as a mobile communications device.

According to another aspect, there is provided a connector dock comprising:
a receiving portion for receiving the head portion of the connector stud, the head portion having a regular polygonal shape;
a cantilevered tab provided at a front of the receiving portion, the tab having a protrusion which projects from a rear surface of the tab and extends towards a rear of the retaining portion; wherein the protrusion is configured to engage an annular groove formed in a first side of the head portion of the connector stud.

The receiving portion may further comprise a front curved surface which is configured to support a neck portion of the connector stud extending from the first side of the head portion.

The front curved surface may be formed by a pair of front shoulders.

The receiving portion may further comprise a rear curved surface which is configured to support a circular boss which protrudes from a second side of the head portion, the second side being opposed to the first side.

The rear curved surface is formed by a pair of rear shoulders.

The cantilevered tab may be disposed between the pair of front shoulders.

The receiving portion may comprise an opening forming a receiving section and a retaining section defined by a slot. The receiving portion may be configured to receive the head portion of the connector stud in a plane of the slot such that the connector stud can be translated to introduce the head portion to the slot.

The receiving portion may be provided with a rear flange which extends around a perimeter of the opening and is configured to limit axial movement of the connector stud relative to the connector dock.

The receiving portion may comprise an indexing mechanism which preferentially biases the head portion into a plurality of discrete angular positions.

The indexing mechanism may be formed by a pair of biasing surfaces which lie parallel to opposing sides of the head portion and are spaced from one another by a distance which is greater than the width between opposing sides of the head portion, but which is less than the width between opposing corners of the head portion.

The protrusion may be formed as a barb which has directional geometry. The protrusion may comprise an inclined inner surface and an upright outer surface.

According to another aspect, there is provided a connector system comprising a connector stud or device comprising a connector stud and a connector dock as described above.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

### Brief Description of the Drawings

Embodiments will now be described by way of example only, with reference to the Figures, in which:
Figure 1 is a perspective view of an example connector stud according to the present disclosure;
Figure 2 is an exploded view of the connector stud of Figure 1;
Figure 3 is a plan view of a base component of the connector stud;
Figure 4 is a top perspective view of a head component of the connector stud;
Figure 5 is a top view of the head component;
Figure 6 is a bottom perspective view of the head component;
Figure 7 is a bottom view of the head component;
Figure 8 is a front perspective view of a connector dock for use with the connector stud;
Figure 9 is a front view of the connector dock;
Figure 10 is a rear perspective view of the connector dock;
Figure 11 is a rear view of the connector dock;
Figure 12 to 17 show an example connector system according to the present disclosure, at different stages of an engagement action; and

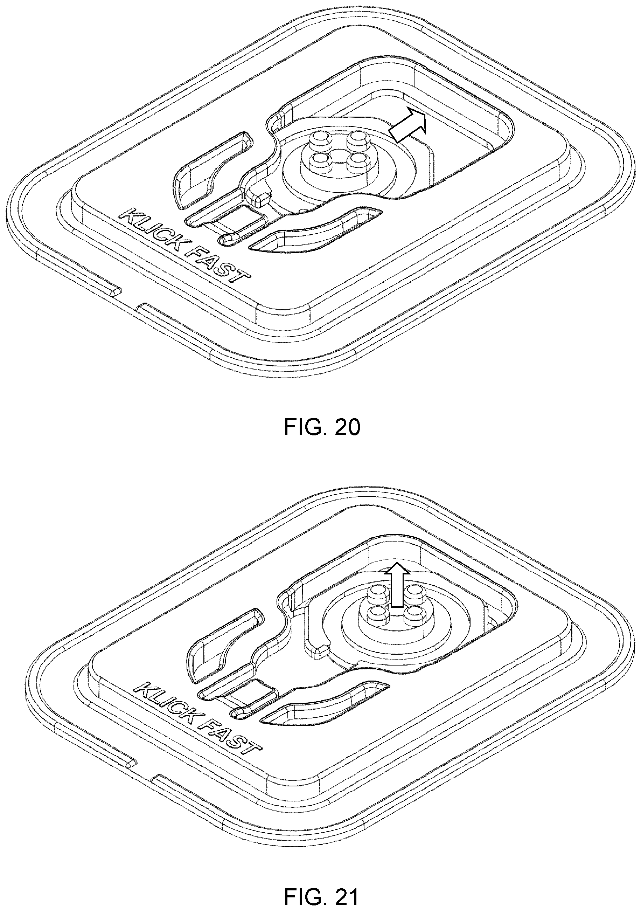

Figures 18 to 22 show the connector system at different stages of a disengagement action.

### Detailed Description

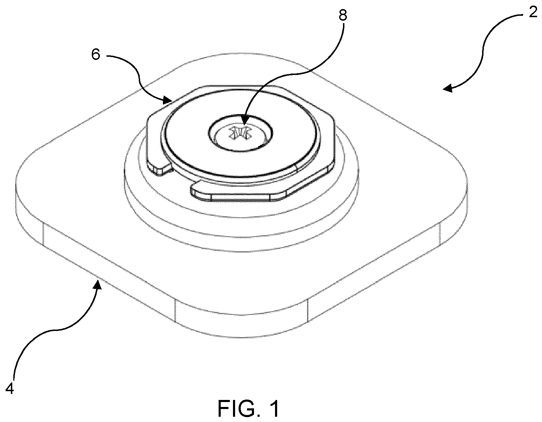

Figure 1 shows an example connector stud 2 according to the present disclosure. The connector stud 2 is formed from a base component 4 and a head component 6. The base component 4 and the head component 6 are formed as discrete, separate elements which are detachably connected to one another using a fastener 8, such as a screw 8. However, in other examples, the base component 4 and the head component 6 may be integrally formed together.

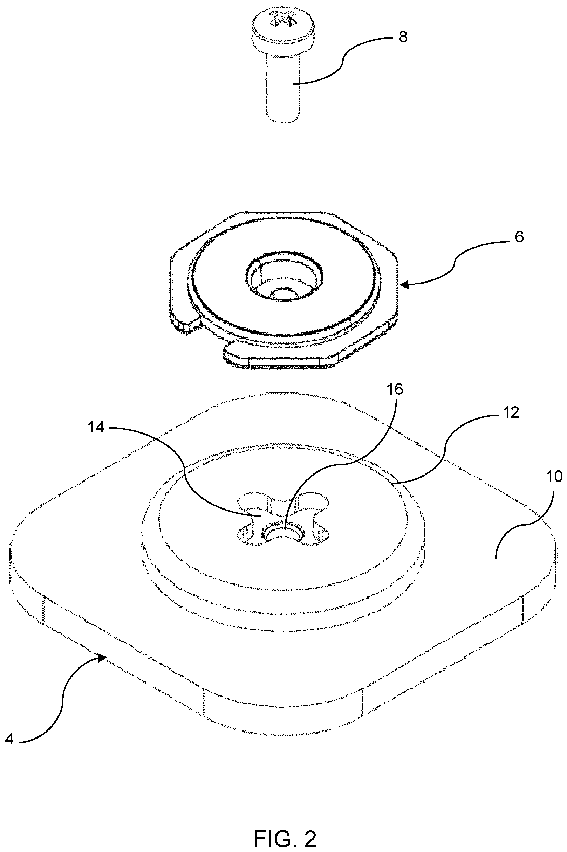

Referring now to Figure 2, which shows an exploded view of the connector stud 2, the base component 4 comprises a base plate 10 and a spacer 12 which is a circular protrusion (although other shapes may be used) which projects upwards from the base plate 10.

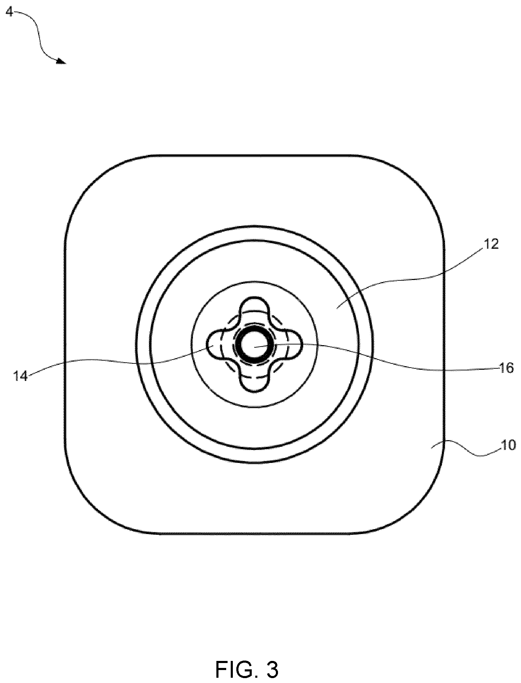

A non-circular recess 14 is formed at the centre of the spacer 12. In this example, the recess 14 has a cruciform profile formed by four lobes, as best seen in Figure 3. A threaded insert 16 is located at the centre of the recess 14 within the body of the base plate 10. The threaded insert 16 sits at least partially within the thickness of the spacer 12.

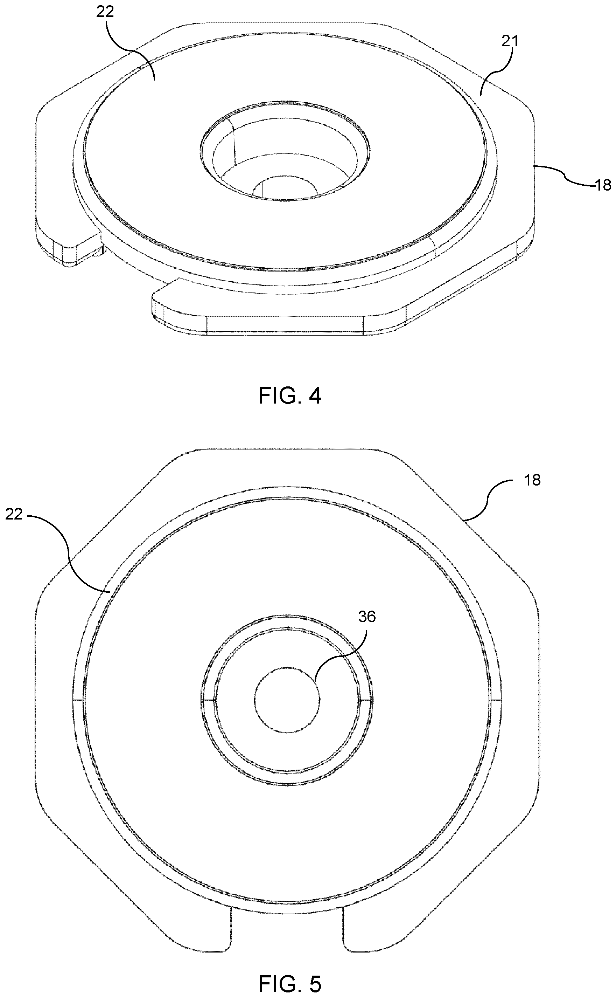

With reference to Figure 4 to 7, the head component 6 comprises a head portion 18 and a neck portion 20 extending from a bottom side 23 of the head portion 18. The head portion 18 generally has a regular polygonal shape such that it has rotational symmetry. In this example, the head portion 18 has eight sides and so is octagon-shaped; however, it will be appreciated that other regular polygonal shapes may be used with fewer or greater sides.

A circular boss 22 protrudes from a top side 21 of the head portion 18, the top side 21 being opposed to the bottom side of the head portion 18. The circular boss 22 is concentric with the centre (its axis of symmetry) of the head portion 18. The circular boss 22 has a radius which is less than the radius of the head portion 18 (i.e., the circumradius of the regular polygonal shape) and thus sits within an outer perimeter of the head portion 18.

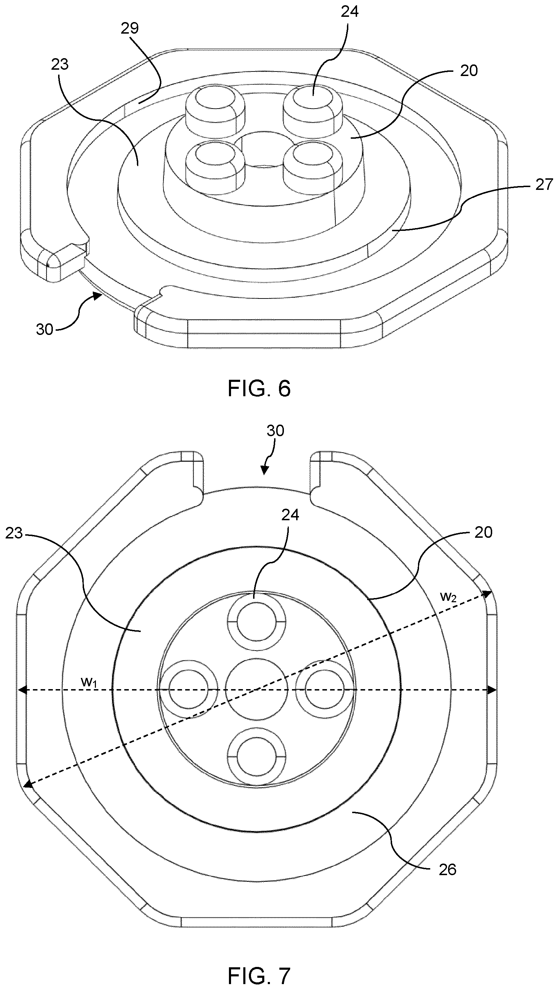

As shown in Figures 6 and 7, a protrusion 24 extends from (or is formed by) the neck portion 20. The protrusion 24 is complementary to the recess 14. In this example, the protrusion 24 is formed by four separate protruding portions which are configured (i.e., are sized and positioned) to engage with the four lobes of the recess 14; although in other examples the protruding portions may be contiguous. The protrusion 24 and the recess 14 form part of a base attachment interface configured to attach the head component 6 to the base component 4.

The protrusion 24 of the head component 6 is engaged in the recess 14 of the base component 4 to prevent relative rotation between the head component 6 and the base component 4. The screw 8 is then passed through a hole 36 formed through the centre of the circular boss 22, head portion 18 and neck portion 20 and engages with the threaded insert 16 to maintain the engagement between the protrusion 24 and the recess 14. The hole 36 is counterbored (or countersunk) such that the head of the screw 8 sits below the level of the circular boss 22. To aid assembly of the base component 4 and the head component 6, it is desirable that the protrusion 24 positively engages with the recess 14 so as to prevent axial movement of the protrusion 24 out of the recess 14 under a relatively small axial force. In particular, the protrusion 24 may clip into the recess 14 via a formation, such as a rib or ridge, or via an interference fit. This holds the head component 6 in place while the screw 8 is screwed into the base component 4.

An annular groove 26 is formed in the bottom side 23 of the head portion 18. The annular groove 26 encircles the neck portion 20. The annular groove 26 defines a radially inner wall 27 and a radially outer wall 29. The radially inner wall 27 is spaced radially outward from the neck portion 20 and the radially outer wall 29 is spaced radially inward of the outer perimeter of the head portion 18. In other examples, the radially inner wall 27 may be continuous with the neck portion 20 (i.e., the radially inner wall 27 of the annular groove 26 is formed by the neck portion 20). The inner and outer walls 27, 29 are substantially upright (vertical) and thus run parallel to one another.

An exit slot 30 is formed in the head portion 18. The exit slot 30 forms a discontinuity in the radially outer wall 29 of the annular groove 26 and in the outer perimeter of the head portion 18. The exit slot 30 is located centrally on one edge of the regular polygonal shape.

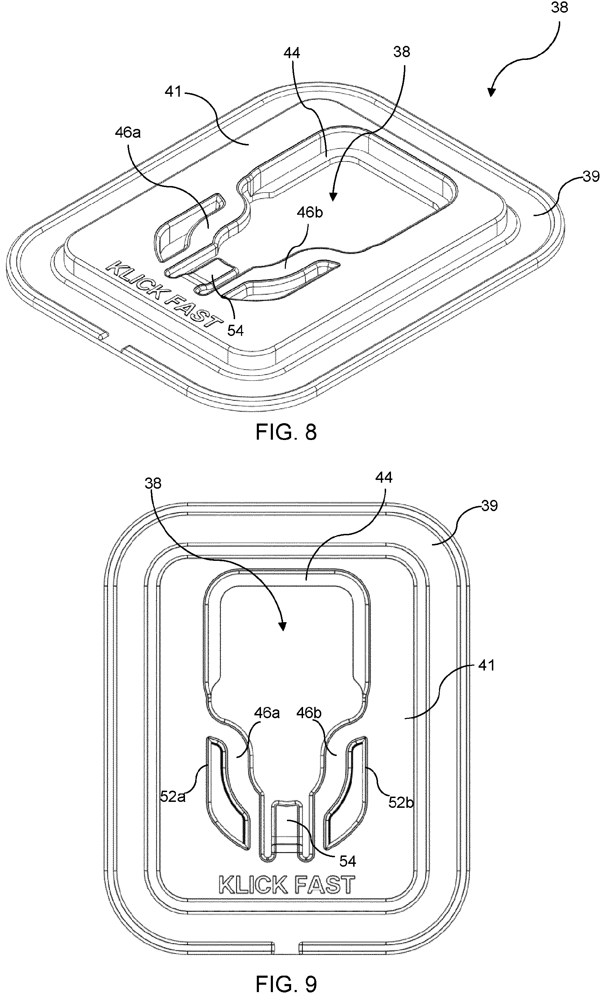

Figures 8 and 9 show a connector dock 37 for use with the connector stud 2 described previously. As shown, the connector dock 37 comprises a base plate 39 and a receiving portion 41 which projects upwards from the base plate 39. The base plate 39 may be used to attach the connector dock 37 to clothing (e.g., by sewing or

The receiving portion 41 comprises an opening 38. An upper (receiving) section of the opening 38 is provided with a rear flange 44 which extends around a perimeter of the opening 38 at the rear of the receiving portion 41 (in an axial direction).

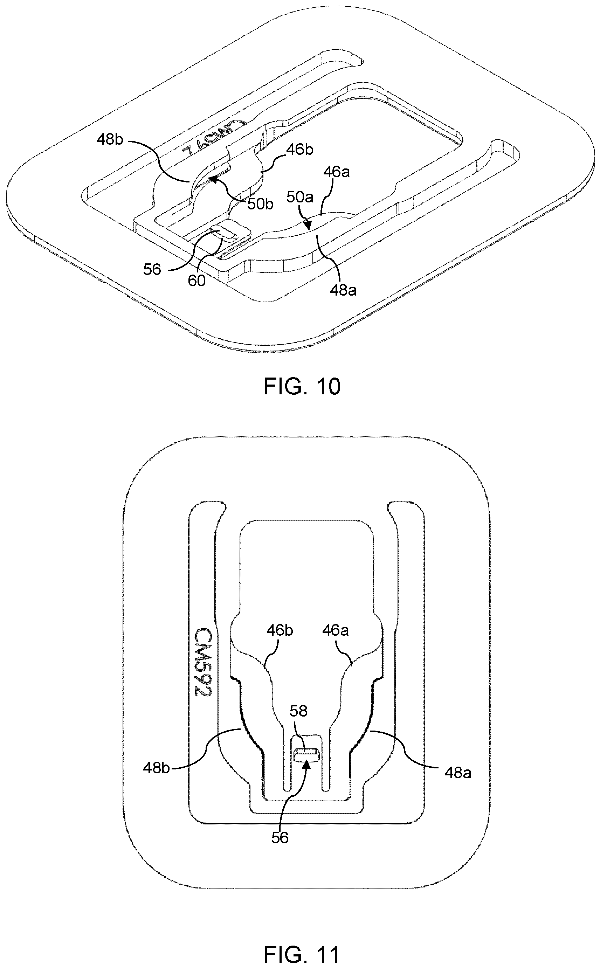

A lower (retaining) section of the opening 38 is provided with a pair of front shoulders 46a, 46b which are spaced from one another at left and right sides of the opening 38 at the front of the receiving portion 41. As shown in Figures 10 and 11, a pair of rear shoulders 48a, 48b are also provided at the rear of the receiving portion 41 which are spaced from one another at left and right sides of the opening 38. The respective front shoulders 46a, 46b are spaced from the respective rear shoulders 48a, 48b in an axial direction to define a pair of slots 50a, 50b therebetween. The slots 50a, 50b extend along the plane of the receiving portion 41. As shown in Figure 10, the slots 50a, 50b are bounded by a pair of biasing surfaces 52a, 52b which face one another.

Each of the front shoulders 46a, 46b defines a curved surface. The curved surfaces may each define a circular arc which both lie on a common circle. Similarly, each of the rear shoulders 48a, 48b defines a curved surface. The curved surfaces may each define a circular arc which both lie on a common circle. The common circles defined by the front shoulders 46a, 46b and the rear shoulders 48b, 48b may have different radiuses but are concentric.

The receiving portion 41 further comprises a cantilevered tab 54 which is provided at the front of the receiving portion 41 between the front shoulders 46a, 46b. A retaining barb or protrusion 56 projects from a rear surface of the tab 54 and extends towards the rear of the retaining portion 41. The barb 56 is located adjacent a distal end of the tab 54.

The barb 56 has a directional geometry with an inclined inner surface 58 and an upright outer surface 60.

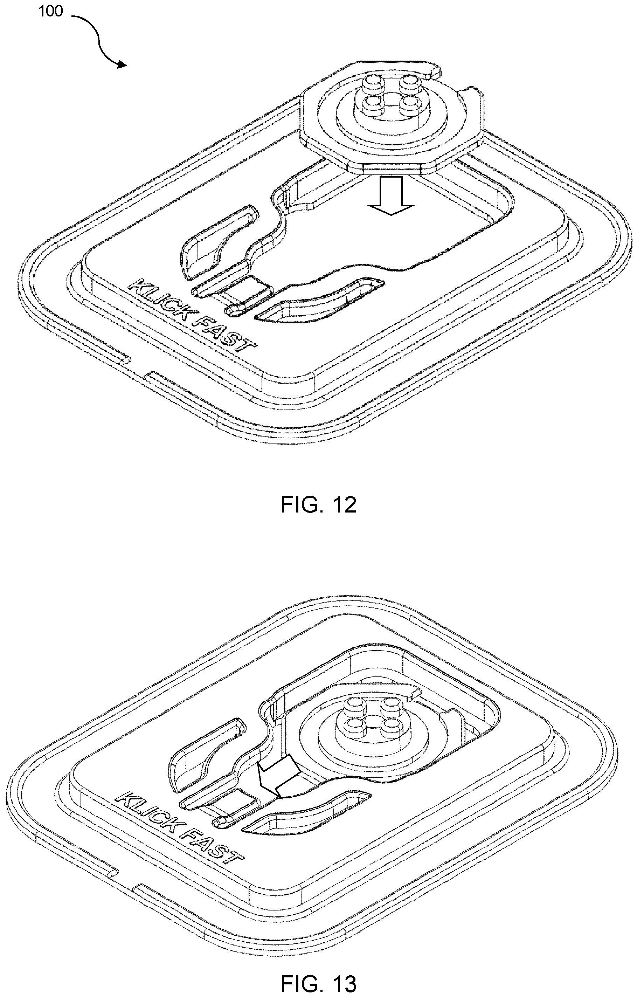

The connector stud 2 and the connector dock 37 together form a connector system 100. As shown in Figure 12, to connect the connector stud 2 to the connector dock 37, the connector stud 2 is inserted into the upper receiving section of the opening 38. The connector stud 2 is inserted such that the top side 21 of the head portion 18 engages the rear flange 44, with the circular boss 22 disposed therebetween, as shown in Figure 13. The rear flange 44 therefore prevents further axial movement of the connector stud 2 relative to the connector dock 37 and positions the connector stud 2 in the plane of the slots 50a, 50b.

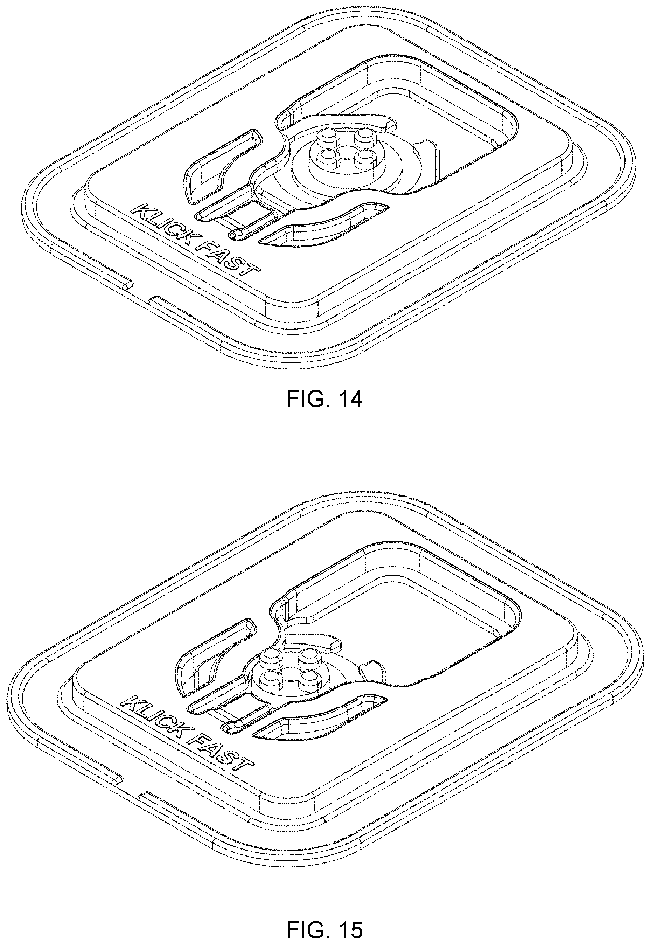

The connector stud 2 can then be translated along the opening 38 and into the lower retaining section. As shown in Figure 14, the head portion 18 is received in the slots 50a, 50b formed between the front shoulders 46a, 46b and the rear shoulders 48a, 48b.

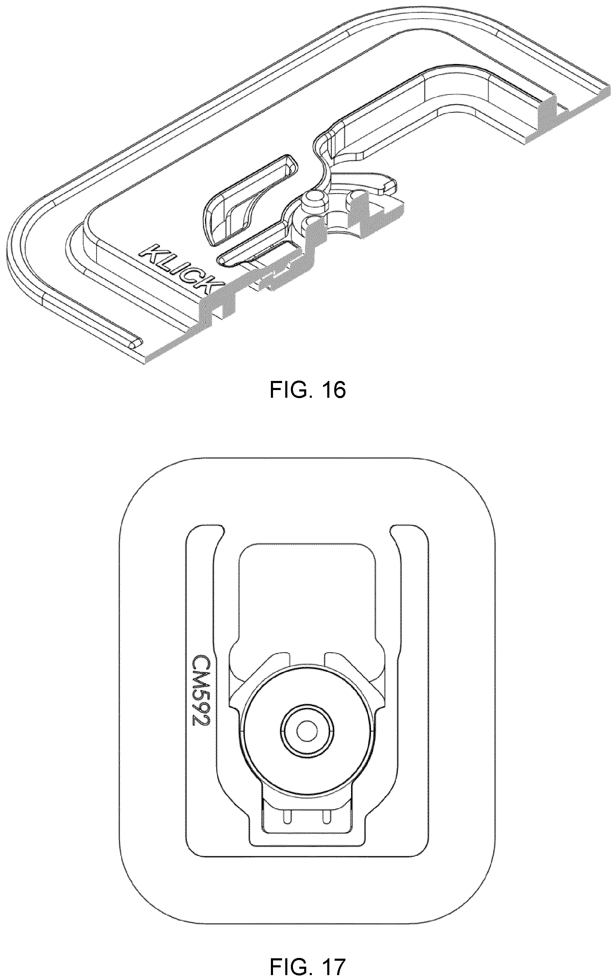

The inclined inner surface 58 of the barb 56 rides over the bottom side 23 of the head portion 18 causing the tab 54 to be deflected forwards until the barb 56 is aligned with the annular groove 26. The tab 54 is resiliently biased towards its rest position which causes the barb 56 to snap into the annular groove 26, as shown in Figures 15 and 16. The upright outer surface 60 of the barb 56 engages the radially outer wall 29 of the annular groove 26 and thus prevents the connector stud 2 from being withdrawn from the connector dock 37. This forms a locked configuration.

As shown in Figure 15, in this position, the neck portion 20 is received and supported by the curved surfaces of the front shoulders 46a, 46b. Similarly, as shown in Figure 17, the circular boss 22 is received and supported by the curved surfaces of the rear shoulders 48a, 48b.

As shown in Figure 15, the head portion 18 is received between the biasing surfaces 52a, 52b. The biasing surfaces 52a, 52b run parallel to one another and are spaced apart by a distance which corresponds to the width w₁ (as shown in Figure 7) between opposing sides of the head portion 18. Specifically, the spacing between the biasing surfaces 52a, 52b is greater than the width w₁ between opposing sides of the head portion 18, but less than the width w₂ between opposing corners (vertices) of the head portion 18 (i.e., the diameter of the circumcircle encircling the head portion 18). Accordingly, rotation of the head portion 18 about its axis of symmetry is only possible by the deflection (i.e., deformation) of the biasing surfaces 52a, 52b or deformation of the head portion 18 itself. Such deformation must result in the spacing between the biasing surfaces 52a, 52b being greater than the diameter of the head portion 18 in order to allow rotation. It will be appreciated that after clearing opposing corners of the head portion 18, the biasing surfaces 52a, 52b are allowed to return to their original rest position. The biasing surfaces 52a, 52b therefore form an indexing mechanism which preferentially biases the head portion 18 into a plurality of discrete angular positions in which opposing sides of the head portion 18 lie parallel with the biasing surfaces 52a, 52b. In this case, since the head portion 18 has eight sides, the connector stud 2 has seven preferred angular positions (at 45-degree intervals) with respect to the connector dock 37.

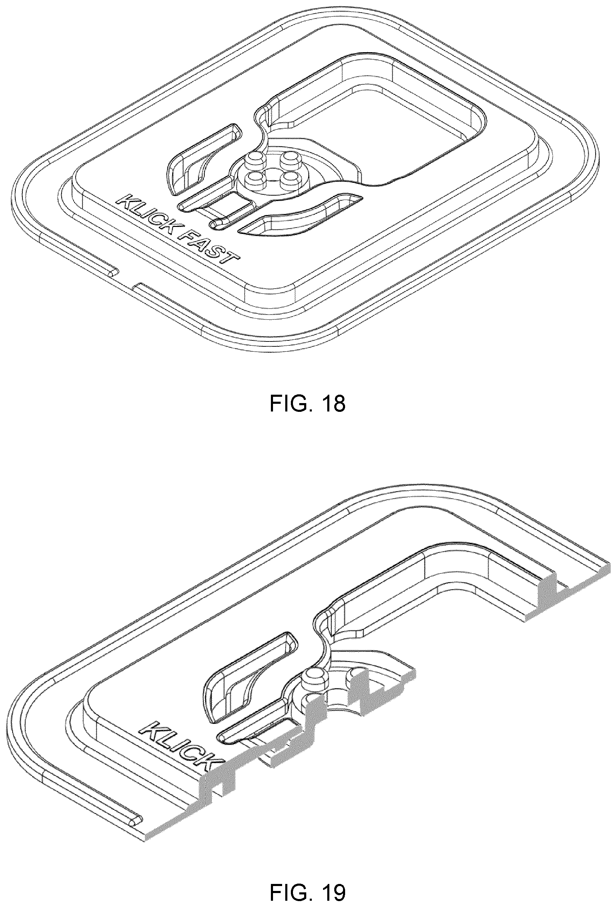

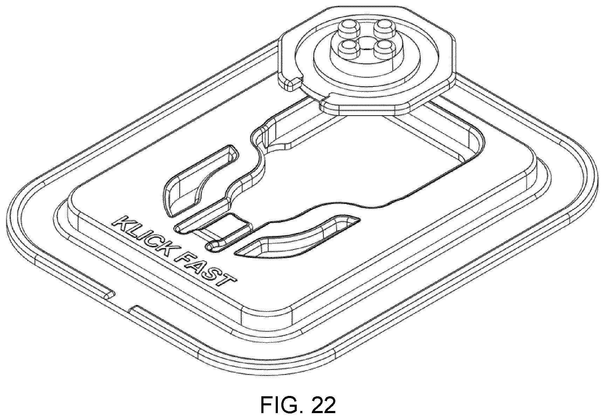

In order to withdraw the connector stud 2 from the connector dock 37, the connector stud 2 must first be rotated into an unlocked configuration. Specifically, the connector stud 2 must be rotated (in this case, by 180 degrees) such that the exit slot 30 is aligned with the barb 56, as shown in Figures 18 and 19. The exit slot 30 has a width which is greater than the width of the barb 56 and so the head portion 18 can be freely translated towards the upper receiving section of the opening 38 with the barb 56 being released from the annular groove 26. Once the head portion 18 is fully located in the upper receiving section of the opening 38, the connector stud 2 can be withdrawn from the opening 38, as shown in Figure 22.

Locating the annular groove 26 on the bottom side 23 of the head portion 18 allows the thickness of the connector stud 2 and connector dock 37 to be reduced. This low-profile design reduces the likelihood of the connector stud 2 and connector dock 37 being inadvertently caught and thus reduces the likelihood of damage.

As described previously, the connector stud 2 utilises a two-piece construction comprising the base component 4 and the separate head component 6. This allows the head component 6 to be replaced if it breaks or becomes worn. Further, this allows the base component 4 and the head component 6 to be formed from dissimilar materials.

In particular, the head component 6 is formed from a self-lubricating material, such as Nylon 6. This allows the head component 6 of the connector stud 2 to rotate within the indexing mechanism formed by the connector dock 37, while minimising wear. The base component 4 may be connected to or integrally formed as part of the housing of a device or other equipment. The device may be an electronic device, such as a mobile communications device (e.g., a police radio). The base component 4 may therefore be formed from an impact resistant material, such as Acrylonitrile Butadiene Styrene (ABS).

As described previously, the non-circular recess 14 and corresponding protrusion 24 form an anti-rotation feature. Although non-circular, it is desirable for the recess 14 and protrusion 24 to have rotational symmetry in order to allow re-orientation of the head component 6 relative to the base component. In particular, in the example shown, where a cruciform recess 14 is used, the head component 6 can be reoriented through 90-degree intervals.

As described previously, the threaded insert 16 is received within the spacer 12 which also defines the recess 14 of the anti-rotation feature. Accordingly, the thickness of the connector stud 2 is minimised. The screw 8 which runs through the centre of the neck portion 20 also provides reinforcement to the neck portion 20.

In the example described above, the biasing surfaces 52a, 52b run parallel to one another to correspond to the opposing sides of the head portion 18. In other examples, the head portion 18 may have an odd number of sides such that opposing sides are not parallel. In this case, the biasing surfaces 52a, 52b may be angled relative to one another to correspond with the sides of the head portion 18.

Although it has been described that the head component 6 has the protrusion 24 and the base component 4 has the recess 14, it will be appreciated that this arrangement may be reversed. Further, each of the head component 6 and the base component 4 may be provided with a combination of recesses and protrusions. Although, the recess 14 has been described previously as being non-circular, it will be appreciated that the anti-rotation feature could be formed by a plurality of circular recesses which together form a non-circular recess. In particular, the cruciform recess 14 shown could be replaced by four circular recesses which receive the four separate protruding portions of the neck portion 20. In addition, although it has been described that the base attachment interface is formed by the recess 14 and the protrusion 24, it will be appreciated that in other examples, the base attachment interface may be formed from any cooperating elements on the base component 4 and the head component 6 which enable the base component 4 to be attached to the head component 6 in a fixed manner.

It will be appreciated that the annular groove 26 may be formed as an annular sector and thus may not permit complete 360-degree rotation.

In other examples, the connector stud 2 may be removable from the connector dock 37 in any angular position. In such arrangements, the exit slot 30 is not required. To allow the barb 56 to be removed from the annular groove 26, the barb 56 may have a unidirectional geometry formed by opposing inclined surfaces which allow the barb 56 to move into and out of the annular groove 26. Alternatively, the radially outer wall 29 of the annular groove 26 may be inclined to allow the barb 56 to ride out of the annular groove 26.

In other examples, the rear shoulders 48a, 48b may connect to one another to form a single curved surface for supporting the circular boss 22. Similarly, the front shoulders 46a, 46b may connect to one another to form a single curved surface for supporting the neck portion 20, with the cantilevered tab 54 located radially outward of the curved surface. With this arrangement the slots 50a, 50b may be connected to form a single slot for receiving the head portion 18 of the connector stud 2.

In other examples, the head portion 18 may not be provided with the circular boss 22. With such an arrangement, the opening 38 may be closed along a rear surface such that the slots 50a, 50b are formed between the front shoulders 46a, 46b and the rear surface (with the rear shoulders 48a, 48b no longer required).

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A connector stud comprising:
a head component comprising a head portion and a neck portion extending from a first side of the head portion, the head portion having a regular polygonal shape;
wherein the head component comprises an annular groove in the first side of the head portion, the annular groove being configured to receive a protrusion of a connector dock.

2. A connector stud as claimed in claim 1, wherein the annular groove encircles the neck portion.

3. A connector stud as claimed in claim 1 or 2, further comprising a circular boss which protrudes from a second side of the head portion, the second side being opposed to the first side.

4. A connector stud as claimed in any one of the preceding claims, further comprising an exit slot which forms a discontinuity in a radially outer wall of the annular groove, the exit slot configured to allow withdrawal of the protrusion of the connector dock from the annular groove.

5. A connector stud as claimed in any one of the preceding claims, further comprising a base component comprising a base plate and a spacer which projects away from the base plate;
wherein at least one of the spacer and the neck portion comprises a base attachment interface configured to attach the head component to the base component; and optionally:
wherein the base attachment interface is formed by one of the spacer and the neck portion comprising a recess and the other of the spacer and the neck portion comprising a complementary protrusion which is received by the recess; wherein the recess and the protrusion are configured to prevent rotation of the head component relative to the base component; and
wherein the base component comprises a threaded insert which sits at least partially within a thickness of the spacer for receiving a screw which passes through the neck portion of the head component to fasten the head component to the base component.

6. A device comprising a connector stud as claimed in any preceding claim; and optionally wherein the device is an electronic device; and optionally wherein the electronic device is a mobile communications device.

7. A connector dock comprising:
a receiving portion for receiving the head portion of the connector stud, the head portion having a regular polygonal shape;
a cantilevered tab provided at a front of the receiving portion, the tab having a protrusion which projects from a rear surface of the tab and extends towards a rear of the retaining portion; wherein the protrusion is configured to engage an annular groove formed in a first side of the head portion of the connector stud.

8. A connector dock as claimed in claim 7, wherein the receiving portion further comprises a front curved surface which is configured to support a neck portion of the connector stud extending from the first side of the head portion.

9. A connector dock as claimed in claim 8, wherein the front curved surface is formed by a pair of front shoulders.

10. A connector dock as claimed in any one of claims 7 to 9, wherein the receiving portion further comprises a rear curved surface which is configured to support a circular boss which protrudes from a second side of the head portion, the second side being opposed to the first side.

11. A connector dock as claimed in claim 10, wherein the rear curved surface is formed by a pair of rear shoulders; and optionally wherein the cantilevered tab is disposed between the pair of front shoulders.

12. A connector dock as claimed in any one of claims 7 to 11, wherein the receiving portion comprises an opening forming a receiving section and a retaining section defined by a slot; wherein the receiving portion is configured to receive the head portion of the connector stud in a plane of the slot such that the connector stud can be translated to introduce the head portion to the slot; and optionally wherein the receiving portion is provided with a rear flange which extends around a perimeter of the opening and is configured to limit axial movement of the connector stud relative to the connector dock.

13. A connector dock as claimed in any one of claims 7 to 12,
wherein the receiving portion comprises an indexing mechanism which preferentially biases the head portion into a plurality of discrete angular positions; and optionally wherein the indexing mechanism is formed by a pair of biasing surfaces which lie parallel to opposing sides of the head portion and are spaced from one another by a distance which is greater than the width between opposing sides of the head portion, but which is less than the width between opposing corners of the head portion.

14. A connector dock as claimed in any one of claims 7 to 13, wherein the protrusion comprises an inclined inner surface and an upright outer surface.

15. A connector system comprising a connector stud or device comprising a connector stud as claimed in any one of claims 1 to 6 and a connector dock as claimed in any one of claims 7 to 14.
